# EUROPEAN PATENT APPLICATION

(11) **EP 4 838 271 A1**
(43) Date of publication of application: **11.11.2026**
(21) Application number: 26176449.2
(22) Date of filing: 05.05.2026
(51) Int. Cl.: G02B 5/28, B42D 25/373, B42D 25/29, C09C 1/00

(54) **OPTICAL STRUCTURES PROVIDING DICHROIC EFFECTS AND METHOD FOR PREPARATION**

(30) Priority: 07.05.2025 US 202519201259
(71) Applicant: Southwest Research Institute, San Antonio, Texas 78238-5166 (US)
(72) Inventor: HEMMERLING, John R., San Antonio, TX, 78215 (US); BOEHME, Jeffrey L., Fair Oaks Ranch, TX, 78015 (US); PHILLIPS, Roger W., Santa Rosa, CA, 95405 (US)
(74) Representative: Lucke, Andreas

(57) **Abstract**

An optical structure and its method of preparation. The optical structure relies upon a single metal layer and can produce a first color in a reflection view and a second color different from the first color in transmission view and/or changes to a different color when viewing at different angles in both transmission and reflection views. Such structures can be relied upon to prevent counterfeiting of a document, card, product or package.

## Description

### GOVERNMENT SUPPORT CLAUSE

This invention was made with United States Government support under Contract No. 2031ZA21C00004 P00004, from the U.S. Department of the Treasury. The Government has certain rights in this invention.

### FIELD

The present disclosure is directed at an optical structure and its method of preparation. The optical structure provides dichroic properties which can be relied upon to prevent counterfeiting of security documents.

### BACKGROUND

Security documents of value such as bank notes, stock certificates, credit cards, passports, and tickets are targets for counterfeiters. Using photocopiers or standard photography has allowed counterfeited documents to be produced but these technologies have been countered by new optical effects, in particular, optically variable effects, that cannot be directly copied. Such devices include holograms that change an image as the document is tilted. For example, on the British Pound, the number "Fifty" becomes "Pounds" upon tilting. Within the two gold foil squares on the front of a £₅₀ note the images change between "50" and a "£" symbol. However, this angle-dependent device is also subject to duplication since holography has been established around the world with thousands of holographic laboratories. In general, holography has become a well-known art, and holographic capabilities abound throughout the world. Access to holographic hardware is thus relatively easy to obtain and this has allowed devices based on holography to be compromised.

U.S. Patent No. 5,135,812 entitled *Optically Variable Thin Film Flake And Collection Of The Same* reports on the use of optical thin film flakes and coating and inks incorporating the same and a method for making the same, and more particularly to optically variable thin film flakes and inks used in anti-counterfeiting applications.

U.S. Patent No. 10,838,218 entitled *Optical Structures Providing Dichroic Effects* discloses optical structures that can comprise at least two metal layers that sandwich at least one transparent dielectric layer between the two metal layers. The at least one transparent layer sandwiched between the two metal layers can have a refractive index that is greater than, less than or equal to 1.65. The optical structures are identified to provide a color shift when view in reflection and transmission mode as a function of viewing angle and can be used for security features when included in documents, bank notes, passports, ID cards, chip cards, credit cards, stock certificates, etc.

U.S. Patent No. 11,840,112 entitled *Optical Structures Providing Dichroic Effects* discloses optical structures, one of which comprises at least three metal layers and two dielectric layer which produces a first color in reflection view and a second color different from the first color in transmission view.

### SUMMARY

An optical structure having dichroic effects comprising a single metal layer and two dielectric layers disposed on and in contact with opposite sides of said single metal layer wherein said single metal layer indicates a ratio of refractive index to extinction coefficient of less than 0.6 and the two dielectric layers disposed on and in contact with the metal layer indicate a refractive index of less than 1.65. Two additional dielectric layers are each separately disposed on and in contact with one of the two dielectric layers on the single metal layer, where the two additional dielectric layers indicate a refractive index of greater than or equal to 1.65. The optical structure: (i) produces a first color in a reflection view and a second color different from the first color in a transmission view; and/or (ii) changes to a different color when viewing at different angles in both transmission and reflection views.

An optical structure having dichroic effects comprising a single metal layer and two dielectric layers disposed on and in contact with opposite sides of said single metal layer wherein said single metal layer indicates a ratio of refractive index to extinction coefficient of less than 0.6 and the two dielectric layers disposed on and in contact with the metal layer indicate a refractive index of greater than or equal to 1.65. Two additional dielectric layers are each separately disposed on and in contact with one of the two dielectric layers on the single metal layer where the two additional dielectric layers indicate a refractive index of less than 1.65. The optical structure produces: (i) a first color in a reflection view and a second color different from the first color in a transmission view; and/or (ii) changes to a different color when viewing at different angles in both transmission and reflection views.

An optical structure having dichroic effects comprising a single metal layer and two dielectric layers disposed on and in contact with opposite sides of said single metal layer wherein said single metal layer indicates a ratio of refractive index to extinction coefficient of less than 0.6 and the two dielectric layers disposed on and in contact with the metal layer indicate a refractive index of greater than or equal to 1.65. Two additional dielectric layers each separately disposed on and in contact with one of the two dielectric layers on the single metal layer where the two additional dielectric layers indicate a refractive index of greater than or equal to 1.65. The optical structure: (i) produces a first color in a reflection view and a second color different from the first color in a transmission view and/or (ii) changes to a different color when viewing at different angles in both transmission and reflection views.

An optical structure having dichroic effects comprising a single metal layer having a length and two dielectric layers disposed on and in contact with opposite sides of said single metal layer wherein the single metal layer indicates a refractive index to extinction coefficient of less than 0.6 and the two dielectric layers disposed on and in contact with the single metal layer each having an exposed surface that runs along the length of the single metal layer. The two dielectric layers are characterized in that: (1) both indicate a refractive index of greater than or equal to 1.65; or (2) both indicate a refractive index of less than 1.65. The optical structure: (i) produces a first color in a reflection view and a second color different from the first color in a transmission view; and/or (ii) changes to a different color when viewing at different angles in both transmission and reflection views

### BRIEF DESCRIPTION OF THE DRAWINGS

**FIG. 1** illustrates one preferred five (5) layer optical device herein.
**FIG. 2A** illustrates another preferred five (5) layer optical device herein.
**FIG. 2B** illustrates another preferred five (5) layer optical device herein.
**FIG. 3A** shows observed experimental transmission and reflection spectra for a five (5) layer optical device of ZnS/MgF₂/Ag/MgF₂/ZnS.
**FIG. 3B** shows transmission and reflection spectra from modeling studies a five (5) layer optical device of ZnS/MgF₂/Ag/MgF₂/ZnS.
**FIG. 4** shows modeled color coordinates at different viewing angles up to 45 ° for a five (5) layer optical device.
**FIG. 5** shows the transmission and reflection spectra of silver at a thickness of 25.0 nm.
**FIG. 6A** illustrates a preferred optical device herein having three (3) layer construction.
**FIG. 6B** shows another preferred optical device herein having three (3) layer construction.
**FIG. 7A** shows the observed experimental transmission and reflection spectra for a three (3) layer optical device of ZnS/Ag/ZnS.
**FIG. 7B** shows transmission and reflection spectra from modeling studies for a three (3) layer optical device of ZnS/Ag/ZnS.
**FIG. 8** shows modeled color coordinates for a three (3) layer optical device made from ZnS and Ag at different viewing angles.
**FIG. 9** shows the light transmission improvement for bare Capitol Bond Paper when adding UV cured polymer resin into the pores of the paper.
**FIG. 10** provides a comparison of the percent reflection and percent transmission versus wavelength after screen printing with the referenced dichroic ink.
**FIG. 11** shows the reflection and transmission results of the subject dichroic ink containing translucent green dye and not containing translucent green dye when printed on Capitol Bond Paper where the optical device is described in U.S. Patent No. 10,838,218 (two metal layers that sandwich at least one transparent dielectric layer further including upper and lower dielectric layers).
**FIG. 12** shows the percent transmission of calendered Glassine Paper and Vellum Paper versus Capitol Bond Paper where the optical device is described in U.S. Patent No. 10,838,218 (two metal layers that sandwich at least one transparent dielectric layer further including upper and lower dielectric layers).
**FIG. 13** shows both the reflection and transmission spectra for a five (5) layer optical device herein applied to calendered and non-calendered paper where the optical device is described in U.S. Patent No. 10,838,218 (two metal layers that sandwich at least one transparent dielectric layer further including upper and lower dielectric layers).

### DETAILED DESCRIPTION

The present invention is directed at an optical device which exhibits the dichroic effect which can be in the form of a foil, pigment, ink or paint. The device exhibits the dichroic effect such that it: (a) produces one color in reflection and a different color in transmission in the visible range (wavelengths in the range of about 380 nm to about 750 nm); and/or (2) changes to a different color when viewing at different angles (in both transmission and reflection views). The optical device may be applied to a document, card, product or package, which would include security documents, where one desires to prevent counterfeiting. Such items may therefore include bank notes, passports, ID cards, chip cards, credit cards, stock certificates, investment securities, vouchers, admission tickets, etc. The optical device herein may also be utilized to protect items of value such as medicinal drug products as well as vehicle and aircraft type products. In addition, the optical device herein may be employed for non-security applications.

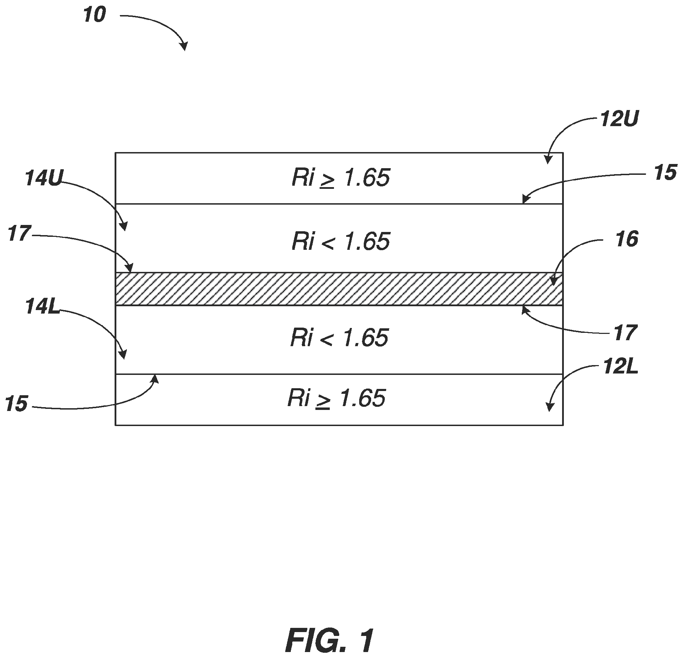

**FIG. 1** illustrates one preferred optical device **10** herein displaying the dichroic effect, having five (5) layers. The optical device preferably includes a single metal layer **16** having a length L that is selected from any metal or metal alloy with a ratio of refractive index (n) to extinction coefficient (k) of less than 0.6. Accordingly, the value of n/k is < 0.6 and would therefore include various individual values such as 0.5, 0.4, 0.3, 0.2, 0.1 and 0.01. Accordingly, the range of values for the metal or metal alloy that is preferably selected for metal layer **16** can fall in the range of 0.01 up to < 0.6, including all individual values therein. For example, the value of n/k may be in the range of 0.01 up to < 0.6, or 0.2 up to < 0.6, or 0.3 up to < 0.6, or 0.4 up to < 0.6, or 0.5 up to < 0.6. The thickness of the single metal layer **16** preferably falls in the range of 5.0 nm to 50.0 nm, including all values and increments therein. More preferably, the thickness of the metal layer falls in the range of 20.0 nm to 30.0 nm. The one metal layer **16** can therefore preferably be selected from silver (Ag), aluminum (Al), nickel (Ni), copper (Cu), gold (Au) or alloys of the foregoing metals.

As can also be seen in **FIG. 1****,** on opposite sides of the single metal layer **16** there is disposed an upper dielectric layer **14U** and lower dielectric layer **14L** where each is in contact with the single metal layer **16** and runs along the length of the single metal layer **16.** Preferably, the two dielectric layers **14U** and **14L** are selected from materials that indicate a refractive index (Ri) of less than 1.65 (< 1.65). Preferably, such dielectric layers are selected from silicon dioxide (SiO₂), aluminum oxide (Al₂O₃), magnesium fluoride (MgF₂), sodium fluoride (NaF), calcium fluoride (CaF₂), strontium fluoride (SrF₂), barium fluoride (BaF₂) or sodium hexafluoroaluminate (Na₃AlF₆). The two dielectric layers **14U** and **14L** may also be selected from polymers, preferably from parylene (para-benzenediyl rings --C₆H₄- connected by 1-2-ethanediyl bridges -CH₂-CH₂-). The dielectric layers **14U** and **14L** on either side of the metal layer **16,** and in contact with the metal layer surfaces **17**, each have a preferred thickness of 10.0 nm to 1000.0 nm, including all values and increments therein. Accordingly, the thickness of two dielectric layers **14U** and **14L** may be 100 nm, 200 nm, 300 nm, 400 nm, 500 nm, 600 nm, 700 nm, 800 nm, 900 nm or 1000 nm. A particular preferred range of thickness for dielectric layers **14** is therefore 10 nm to 500 nm as well as 50 nm to 400 nm.

**FIG. 1** also shows the placement of two additional dielectric layers, namely upper dielectric layer **12U** and lower dielectric layer **12L** where each is separately disposed upon and in contact with the respective outer surfaces **15** of the dielectric layers **14U** and **14L.** These two additional dielectric layers **12u** and **121** are selected from materials having a refractive index (Ri) of greater than or equal to 1.65 (≥ 1.65). Such dielectric layers **12U** and **12L** are more preferably selected from titanium dioxide (TiO₂), cerium oxide (CeO₂), tantalum pentoxide (Ta₂O₅), indium tin oxide (ITO), zirconium dioxide (ZrO₂), niobium oxide (Nb₂O₅), zinc oxide (ZnO), yttrium oxide (Y₂O₃), hafnium oxide (HfO₂), and zinc sulfide (ZnS). Dielectric layers **12U** and **12L** also are each preferably present at a thickness of 5.0 nm to 1000.0 nm, including all values and increments therein. One particularly preferred range is 20.0 nm to 250.0 nm.

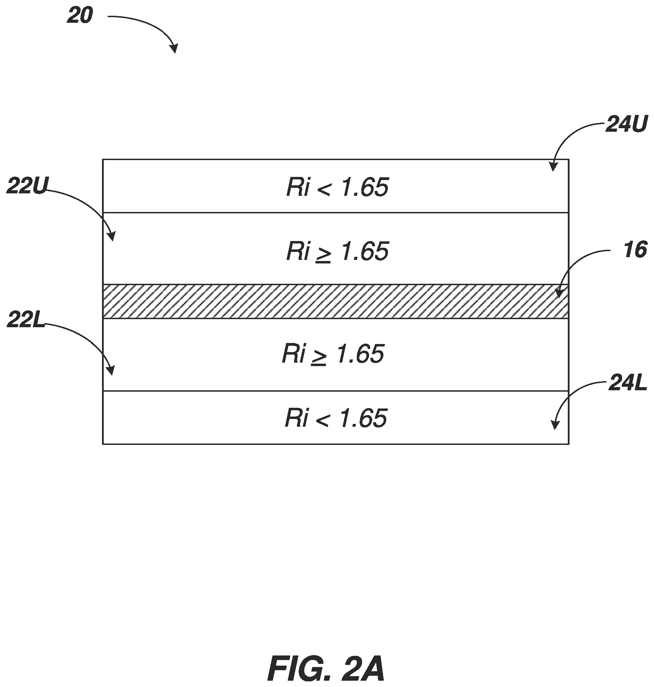

**FIG. 2A** next shows another preferred five (5) layer optical device **20** that is contemplated to display the dichroic effect. In this embodiment, the placement of the relatively high refractive index material layers (i.e. Ri ≥ 1.65) and relatively low refractive index material layers (i.e. Ri < 1.65) are reversed from **FIG. 1****,** with all other parameters being the same. Accordingly the optical device **20** again includes a single metal layer **16** having a length **L** that is similarly selected from any metal or metal alloy with a ratio of refractive index (n) to extinction coefficient (k) of less than 0.6 as described above for **FIG. 1****.** The thickness of the single metal layer **16** again preferably falls in the range of 5.0 nm to 50.0 nm, including all values and increments therein or more preferably in the range of 20.0 nm to 30.0 nm. The single metal layer **16** is also again preferably selected from silver (Ag), aluminum (Al), nickel (Ni), copper (Cu), gold (Au) or alloys of the foregoing metals.

As can also be seen in **FIG. 2A****,** on either side of the one metal layer **16** are upper dielectric layer **22U** and lower dielectric layer **22L** that are in contact with and run along the length **L** of the single metal layer **16.** In this embodiment, the two dielectric layers **22U** and **22L** are selected from materials that indicate a refractive index (Ri) of greater than or equal to 1.65 (≥ 1.65). Such dielectric layers **22U** and **22L** are again preferably selected from titanium dioxide (TiO₂), cerium oxide (CeO₂), tantalum pentoxide (Ta₂O₅), indium tin oxide (ITO), zirconium dioxide (ZrO₂), niobium oxide (Nb₂O₅), zinc oxide (ZnO), yttrium oxide (Y₂O₃), hafnium oxide (HfO₂), and zinc sulfide (ZnS). Dielectric layers 22 are therefore each preferably present at a thickness of 5.0 nm to 1000.0 nm, including all values and increments therein. One particular preferred range is 20.0 nm to 250.0 nm.

**FIG. 2A** also shows that on either side of the dielectric layers **22U** and **22L** having a Ri of ≥ 1.65 are two additional dielectric layers, namely upper dielectric layer **24U** and lower dielectric layer **22L** now having a Ri of < 1.65. Preferably, such dielectric layers are again selected from silicon dioxide (SiO₂), aluminum oxide (Al₂O₃) magnesium fluoride (MgF₂), sodium fluoride (NaF), calcium fluoride (CaF), strontium fluoride (SrF₂), barium fluoride (BaF₂), sodium hexafluoroaluminate (Na₃AlF₆). The two dielectric layers **24U** and **24L** may also be selected from polymers, preferably from parylene (para-benzenediyl rings -C₆H₄-connected by 1-2-ethanediyl bridges -CH₂-CH₂-) as well as acrylate polymers. Acrylate polymers may be understood as polymers prepared from the polymerization of CH₂=C(R₁)(R₂) where R₁ can be a hydrogen or an alkyl group and R₂ is the acrylate group, namely -COO(R₃) where R₃ is an alkyl group. When R₁ is hydrogen and R₃ is a methyl group, the polymer is poly(methyl acrylate). When R₁ is methyl group and R₃ is a methyl group, the polymer is poly(methyl methacrylate). The dielectric layers **24U** and **24L** each have a preferred thickness of 10.0 nm to 1000.0 nm, including all values and increments therein. Accordingly, the thickness of two dielectric layers **24U** and **24L** may be 100 nm, 200 nm, 300 nm, 400 nm, 500 nm, 600 nm, 700 nm, 800 nm, 900 nm or 1000 nm. A particular preferred range of thickness for dielectric layers **24U** and **24L** is therefore 10 nm to 500 nm as well as 50 nm to 400 nm.

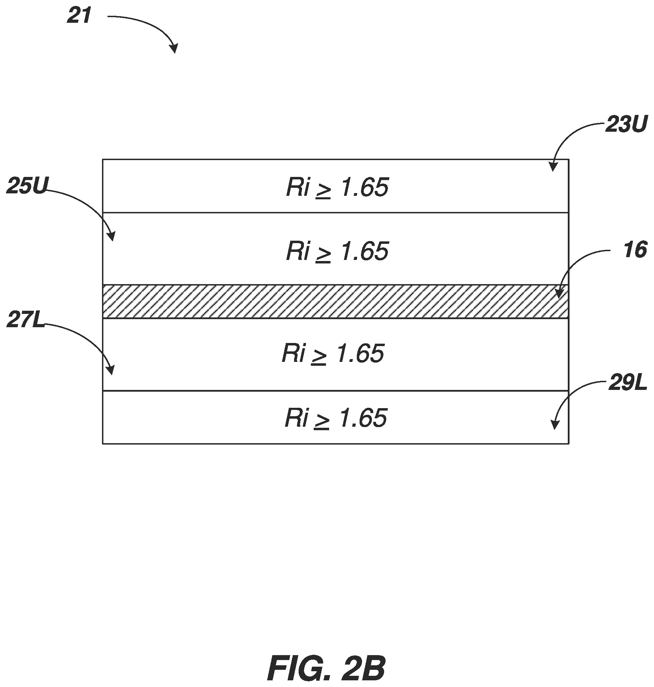

**FIG. 2B** shows another preferred five (5) layer optical device that is contemplated to show a dichroic effect. In this embodiment, there is again a single layer of metal 16 having the characteristics noted above. In this embodiment illustrated in **FIG. 2B****,** the single layer of metal **16** is sandwiched between two upper dielectric layers **23U** and **25U** each having a Ri of ≥ 1.65 and two lower dielectric layers **27L and 29L** also having a Ri of ≥ 1.65. Layers **23U, 25U**, **27L** and **29L** are therefore all preferably selected from titanium dioxide (TiO₂), cerium oxide (CeO₂), tantalum pentoxide (Ta₂O₅), indium tin oxide (ITO), zirconium dioxide (ZrO₂), niobium oxide (Nb₂O₅), zinc oxide (ZnO), yttrium oxide (Y₂O₃), hafnium oxide (HfO₂) and zinc sulfide (ZnS). Dielectric layers **23U, 25U**, **27L** and **29L** in **FIG. 2B** are each preferably present at a thickness of 5.0 nm to 1000.0 nm, including all values and increments therein. One particularly preferred range for layers **23U, 25U**, **27L** and **29L** in **FIG. 2B** is also 20.0 nm to 250.0 nm

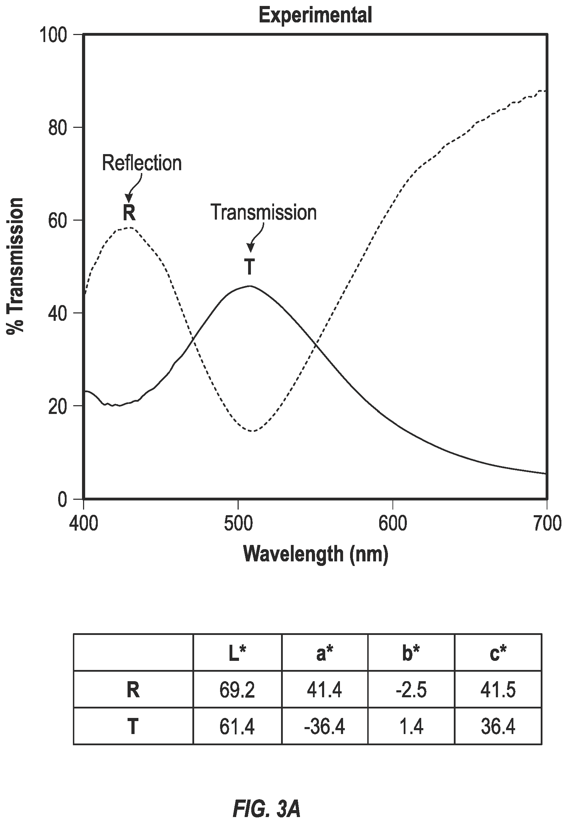

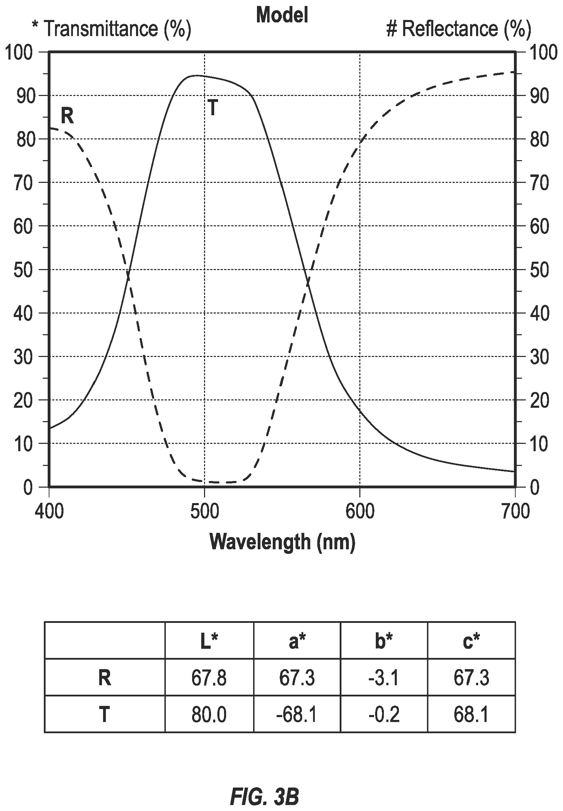

A five (5) layer design was then prepared and evaluated according to what is generally shown in **FIG. 1****.** Namely, layers **12U** and **12L** at a thickness of about 58 nm were sourced from ZnS (Ri, ≥ 1.65) and layers **14U** and **14L** at a thickness of about 150 nm were sourced from MgF₂ (Ri < 1.65) and the single metal layer **16** at a thickness of about 25 nm was sourced from Ag. This may therefore be described as ZnS/MgF₂/Ag/MgF₂/ZnS. Each layer was deposited on a glass slide via ion-beam deposition under relatively low pressure and the thickness of each layer was monitored by a quartz crystal monitor calibrated with contact profilometry. **FIG. 3A** shows the observed experimental transmission and reflection spectra and **FIG. 3B** shows the transmission and reflection spectra from modeling studies. Modeling was achieved with the Essential Macleod software package available from the Thin Film Center, Tucson, Arizona. L* indicates lightness, a* is the red/green coordinate, b* is the yellow/blue coordinate and C* represents chroma. The observed differences between experimental data and modeling studies are believed to be attributed to roughness/scattering between the layers as well as the possibility that the optical properties of the materials utilized in **FIG. 3A** may not exactly match with the bulk property values of the materials utilized in modeling shown in **FIG. 3B**. In any event, the experimental and modeled color coordinates at 0° incident angle in **FIGS. 3A** and **3B** show different colors in transmission and reflection with relatively good chroma, confirming the presence of the dichroic effect.

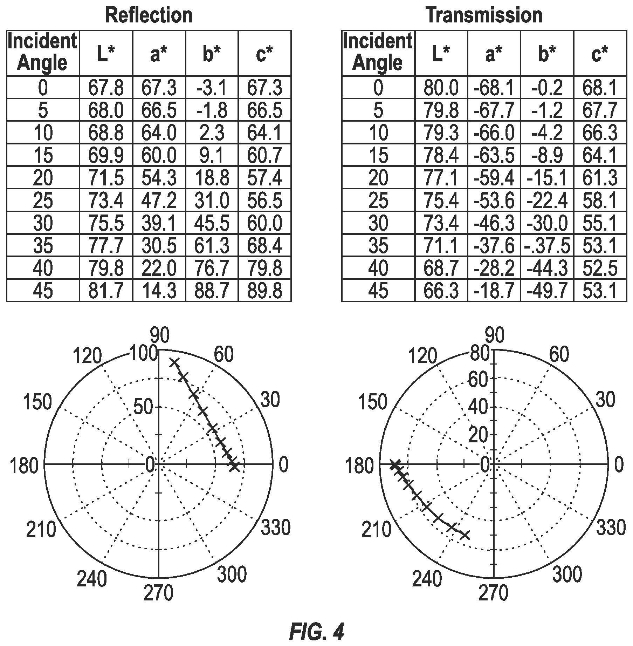

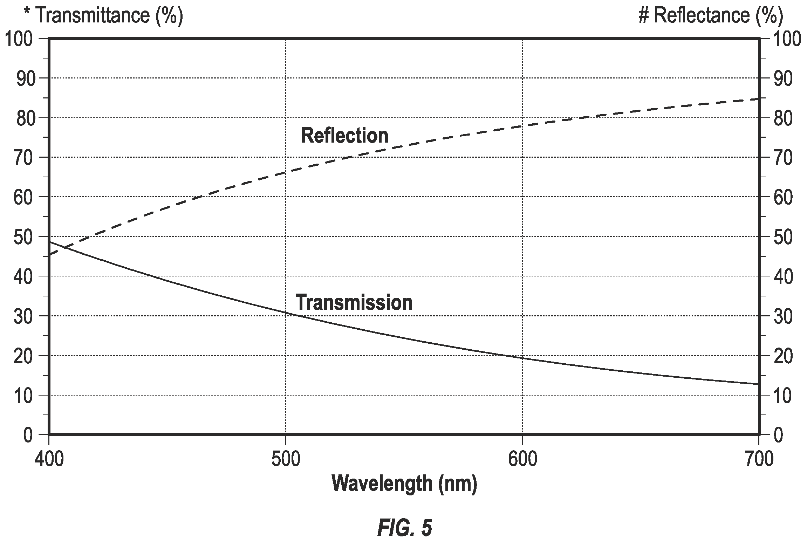

**FIG. 4** shows modeled color coordinates at different viewing angles up to 45° for the above referenced five (5) layer design of ZnS/MgF₂/Ag/MgF₂/ZnS. These results indicate that there is a color shift as the viewing angle changes. Attention is next directed to **FIG. 5** which shows the transmission spectra of a layer of just silver with a thickness of 25 nm. As can be observed, the transmission of a silver layer is less than 50% at all wavelengths. With attention back to **FIG. 3B****,** the transmission of the modeled 5 layer optical device herein can exceed 90% at certain wavelengths. This increase in light transmission is contemplated to demonstrate what can be considered as an induced transmission effect of the design herein.

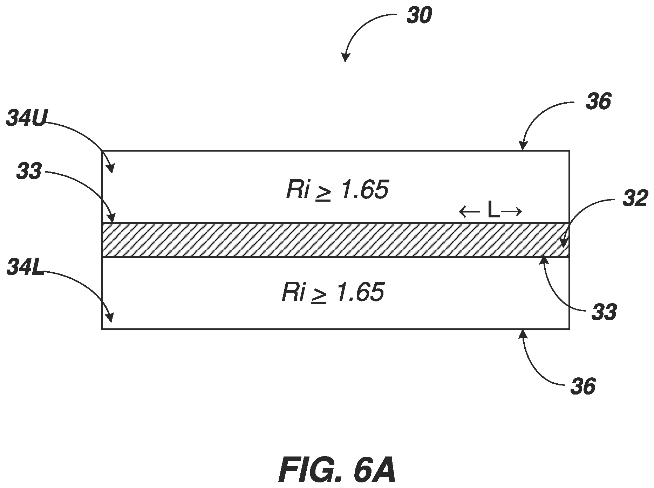

**FIG. 6A** next illustrates another embodiment herein, of what can be described as a three (3) layer optical device **30** also displaying a dichroic effect. It again includes a single metal layer of the type noted above for the five (5) layer construction. Accordingly, the metal layer can again be selected from any metal or metal alloy with a ratio of refractive index (n) to extinction coefficient (k) of less than 0.6. As noted above, as the value of n/k is < 0.6, it would therefore again include various individual values such as 0.5, 0.4, 0.3, 0.2, 0.1 and 0.01. Accordingly, the range of values for the metal or metal alloy that is preferably selected for metal layer **30** can again fall in the range of 0.01 up to < 0.6, including all individual values therein. The thickness of metal layer **32** again preferably falls in the range of 5.0 nm to 50.0 nm with 20.0 nm to 30.0 nm being a particularly preferred range. The single metal layer **32** is again preferably selected from silver (Ag), aluminum (Al), nickel (Ni), copper (Cu), gold (Au) or alloys of the foregoing metals.

In the embodiment shown in **FIG. 6A****,** the single metal layer **32** having a length (**L**) is sandwiched between two dielectric layers **34U** and **34L,** each of which dielectric layers have a Ri of ≥ 1.65. The two dielectric layers **34U** and **34L** therefore cover and are in contact with each of the opposing surfaces **33** of metal layer **32**. The two dielectric layers **34U** and **34L** each provide an exposed surface **36** that runs along the indicated length (**L**) of the single metal layer **32** such that the exposed surface **36** is generally parallel to the length (**L**) of the metal layer. The two dielectric layers **34U** and **34L** each preferably have a thickness of 5.0 nm to 1000.0 nm, including all values and increments therein. One particular preferred range is 20.0 nm to 250.0 nm. The two dielectric layers **34U** and **34L** in **FIG. 6A** with Ri ≥ 1.65 may be selected from titanium dioxide (TiO₂), cerium oxide (CeO₂), tantalum pentoxide (Ta₂O₅), indium tin oxide (ITO), zirconium dioxide (ZrO₂), niobium oxide (Nb₂O₅), zinc oxide (ZnO), yttrium oxide (Y₂O₃), hafnium oxide (HfO₂) and zinc sulfide (ZnS).

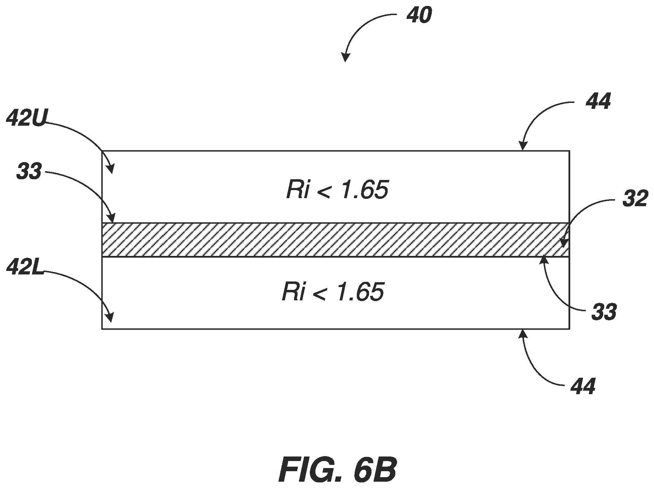

**FIG. 6B** shows another embodiment of a three (3) layer optical device **40.** It again begins with a single metal layer of the type noted above for the five (5) layer construction. In the embodiment now shown in **FIG. 6B****,** the single metal layer **32** is sandwiched between two dielectric layers **42U** and **42L,** each of which dielectric layers has a Ri of < 1.65. The two dielectric layers **42U** and **42L** therefore cover and are in contact with each of the opposing surfaces **33** of metal layer **32.** The two dielectric layers **42U** and **42L** each provide an exposed surface **44.** The two dielectric layers **42U** and **42L** each preferably have a thickness of 10.0 nm to 1000.0 nm and are again preferably selected from silicon dioxide (SiO₂), aluminum oxide (Al₂O₃) magnesium fluoride (MgF₂), sodium fluoride (NaF), calcium fluoride (CaF), strontium fluoride (SrF₂), barium fluoride (BaF₂) or sodium hexafluoroaluminate (Na₃AlF₆). The two dielectric layers **42U and 42L** may also again be selected from polymers as described in **FIG. 2A****.**

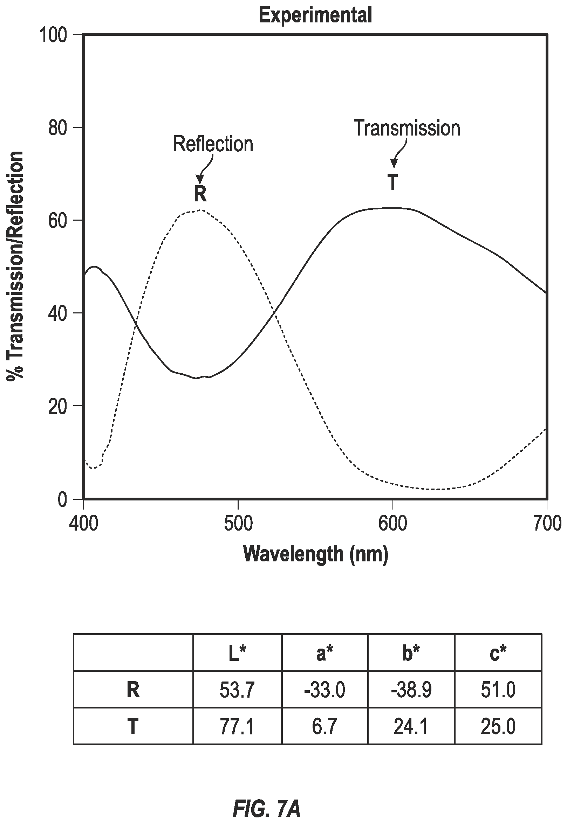

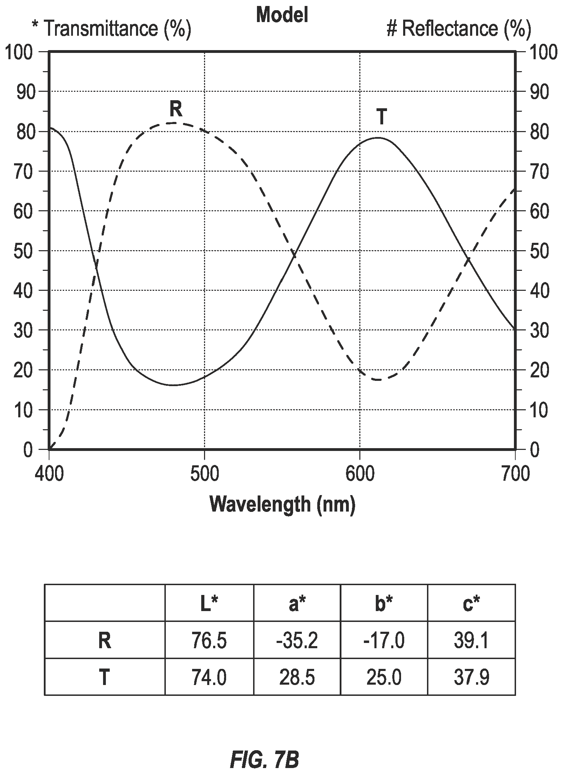

With reference to **FIG. 6A****,** the referenced three (3) layer optical device was evaluated employing ZnS as dielectric layers **34U** and **34L** at a thickness of about 175.0 nm and metal layer **32** was selected from Ag at a thickness of about 25.0 nm. The method of preparation was the same as that disclosed above, namely each layer was deposited on a glass slide via ion-beam deposition under relatively low pressure and the thickness of each layer was monitored by a quartz crystal monitor utilizing contact profilometry. **FIG. 7A** shows the observed experimental transmission and reflection spectra and **FIG. 7B** shows the transmission and reflection spectra from modeling studies, again utilizing the Essential Macleod software package, noted herein. The experimental and modeled color coordinates at 0° incident angled in FIGS. 7A and 7B again show different colors in transmission and reflection with relatively good chroma, confirming the presence of the dichroic effect.

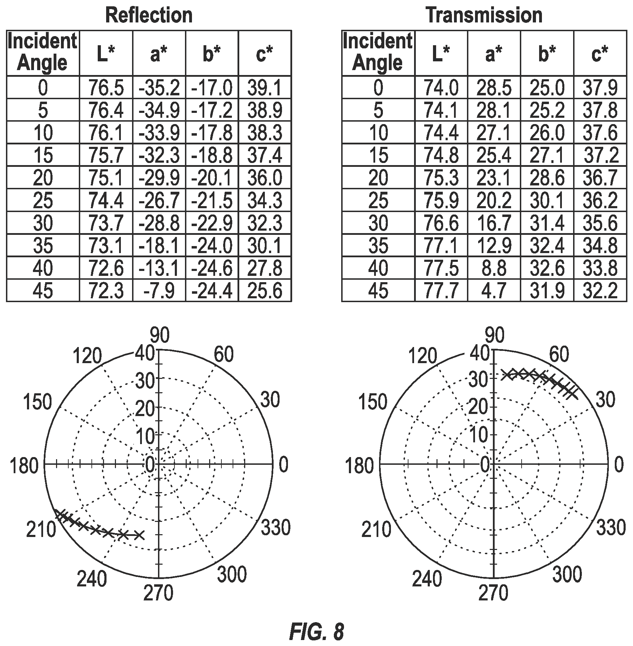

The modeled color coordinates for the above referenced three (3) layer optical device from ZnS and Ag at different viewing angles is shown in **FIG. 8****.** The results indicate that in this situation, the three (3) layer design observes relatively less color shift with viewing angle as compared to the five (5) layer design (**FIG. 4**). However, in the broad context of the present invention, some designs may have relatively large color shifts while others may have relatively small color shifts.

It should now be appreciated that the optical devices herein are such that they do not require the use of two metal layers separated by a dielectric layer. In that sense, the optical devices may be understood here as not having a dielectric spacer between the two metal layers, or the optical devices herein can be understood as a spacer-less design. As more specifically illustrated in **FIGS. 1****,** **2A****,** **2B****,** **6A** and **6B****,** the optical device itself includes only a single metal layer that sandwiches between at least two dielectric layers. The use of two metal layers separated by a dielectric layer has therefore been obviated by the present invention, while showing the dichroic effect.

The optical devices disclosed herein may be conveniently formulated into a dichroic foil, a dichroic pigment, a dichroic ink or a dichroic paint. In addition, the initial layer of dielectric material for either the three (3) layer or five (5) layer optical device may be disposed over a selected substrate, followed by the remaining layers on such an initial dielectric layer. For example, in the case of the three (3) layer optical device, as shown in **FIG. 6A****,** and from the bottom up, deposition of dielectric layer **34L** on a selected substrate, deposition of metal layer **32** and then deposition of dielectric layer **34U.** For the five (5) layer optical device shown **in** **FIG. 1****,** it would involve, from the bottom up, deposition of dielectric layer **12L** on a given substrate, dielectric layer **14L,** metal layer **16,** dielectric layer **14U** and then dielectric layer **12U.** The selected substrate can include, but is not limited to a polymeric sheet which may be selected from poly(ethylene terephthalate) (PET), polyethylene, polypropylene, polycarbonate or a non-woven fabric. The substrate can also be coated with a release agent or a release layer. The release layer may comprise poly(vinyl alcohol) type polymers, which is preferably water soluble, or an acrylate polymer, which is soluble in a given solvent.

The optical device formed on a selected substrate may therefore be removed from the substrate and divided into platelets having a size that is then suitable for use in a pigment or ink. The platelets so formed preferably have lateral dimensions (length or width) in the range of 1.0 microns to 100 microns, including all values and increments therein. It is also contemplated that in the case of screen printing, platelets may then preferably have lateral dimensions of up to 500 microns.

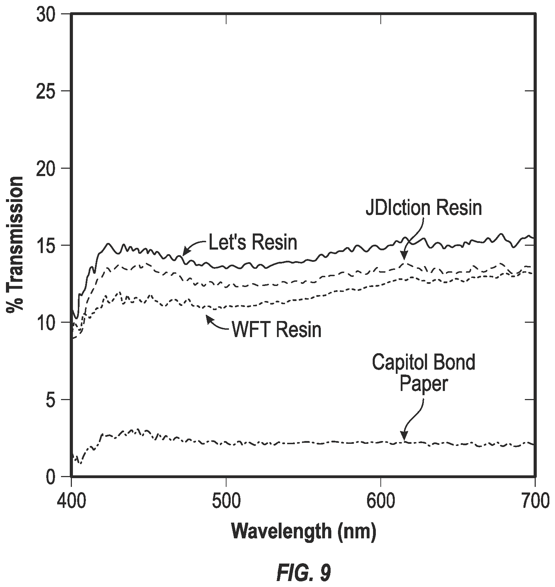

To improve the transmission of optical devices herein showing the dichroic effect, as well as other reported optical devices displaying a dichroic effect (e.g. such as those described in U.S. Patent No. 10,838,218), and in the particular situation where the optical device is applied to a paper substrate, it has been found beneficial to now place polymeric resin into the pores of the paper. More particularly, precursor resin compositions can be placed in the pores of the paper that are then cured into polymer by UV light. The polymer resins that are then present in the pores are selected such that the refractive index of such polymer resin (Ri) is in the range of 1.3 to 1.8. Preferred precursor resins that can then be cured with UV light are available from JDiction, Let's Resin, or Wavefront Technology (WFT Resin). **FIG. 9** shows that light transmission improves from about 2.0 % for bare Capitol Bond paper up to about 15.0% transmission when adding UV cured polymer resin into the pores of the paper.

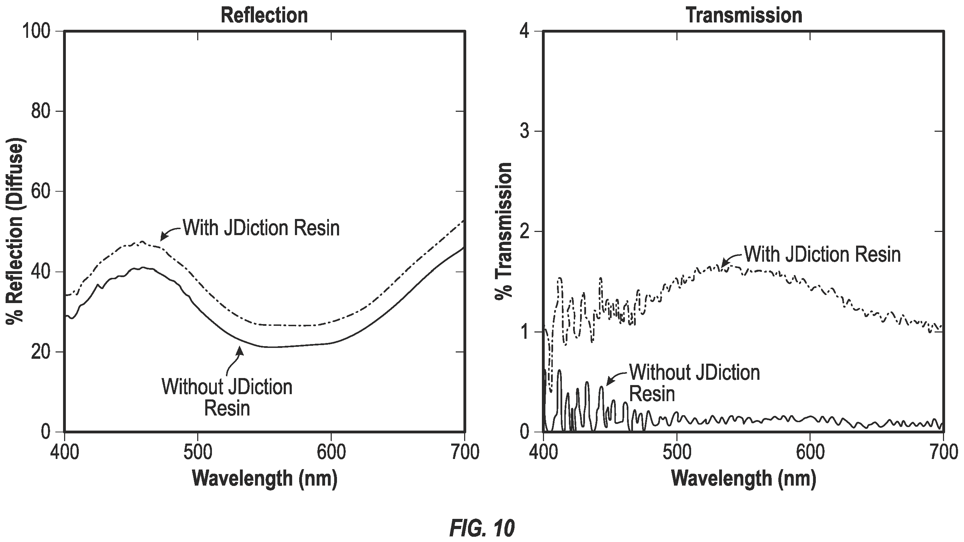

Next, a dichroic ink was prepared by loading 24.0 wt. % of a five (5) layer optical device as disclosed in U.S. Patent No. 10,838,218 (i.e., two metal layers that sandwich at least one transparent dielectric layer further including upper and lower dielectric layers) with purple-green pigment into an acrylic medium obtained from Art 'N Glow. The ink was then screenprinted onto bare Capitol Bond paper and Capitol Bond Paper that was treated with JDiction UV resin and UV cured. **FIG. 10** provides a comparison of the percent reflection and % transmission versus wavelength after screen printing with such dichroic ink on Capitol Bond paper, both with and without treatment of the paper with the UV polymeric resin. As can be observed, the magnitude of the light transmission with UV polymer resin in the pores of the Capital Bond paper is increased by a factor of greater than 10. Meanwhile the reflectance of the screen print is not significantly impacted. This therefore confirms that treatment of the porous paper surface with UV cured polymer resin improves the light transmission of the dichroic ink, while maintaining the reflection characteristics. It is also contemplated herein that such treatment of porous paper with UV cured polymer resin would have a similar effect with respect to the optical structures having a single metal layer as described herein.

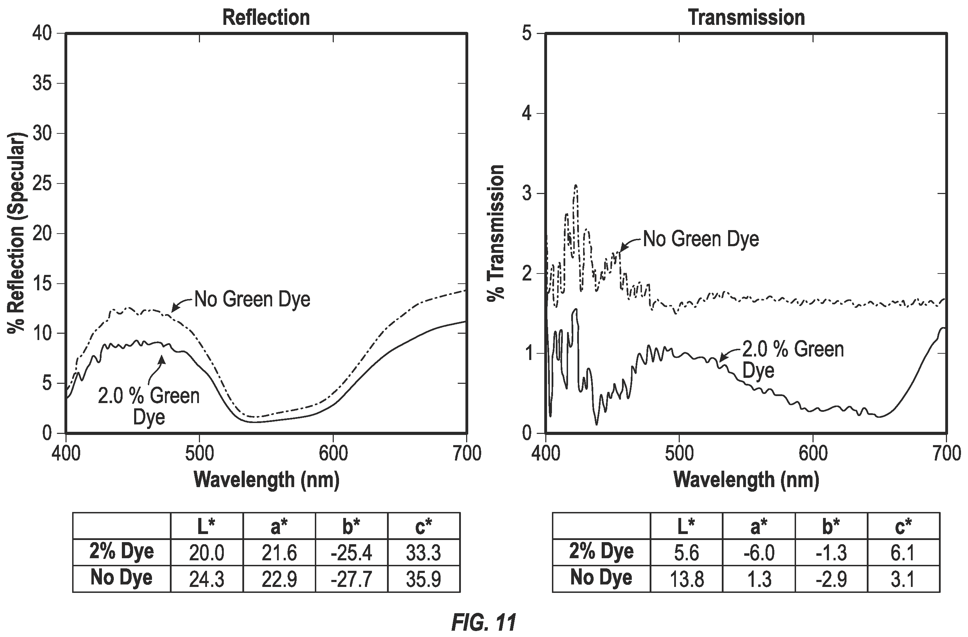

In addition, it has been observed that the addition of transparent or translucent dyes to a dichroic ink herein including the disclosed optical devices will improve the transmitted color while not diminishing the reflected color. The level of transparent or translucent dye that may be added to the dichroic ink including the optical devices herein may preferably fall in the range of 0.1 % (wt.) to 5.0 % (wt.). For example, a dichroic ink herein was prepared by loading 12.0 wt. % of a five (5) layer optical device as disclosed in U.S. Patent No. 10,838,218 (i.e., two metal layers that sandwich at least one transparent dielectric layer further including upper and lower dielectric layers) of magenta-green pigment with 2.0 wt. % of translucent green dye in a UV resin medium (Alumilite^{®} translucent green dye). The ink was then printed on Capitol Bond paper and the reflection and transmission results are shown in **FIG. 11****.** The reflection spectra and chroma are not significantly impacted by the green dye and the green dye does not overpower the reflected color. The addition of the green dye lowers the overall transmission through the paper. However, the green dye does result in more prominent peak transmission, which yields significantly stronger chroma. Overall, the addition of the green dye results in significant improvement in the chroma of the transmitted color while preserving the reflected color of the pigment. It is also contemplated herein that such treatment of porous paper with transparent or translucent dye would have a similar effect with respect to the optical structures having a single metal layer as described herein.

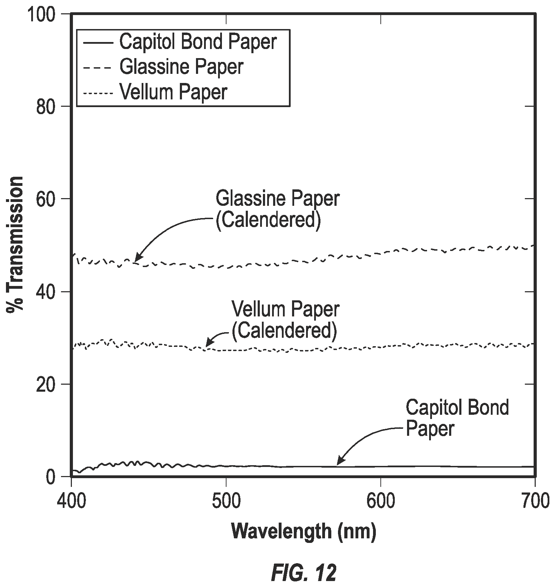

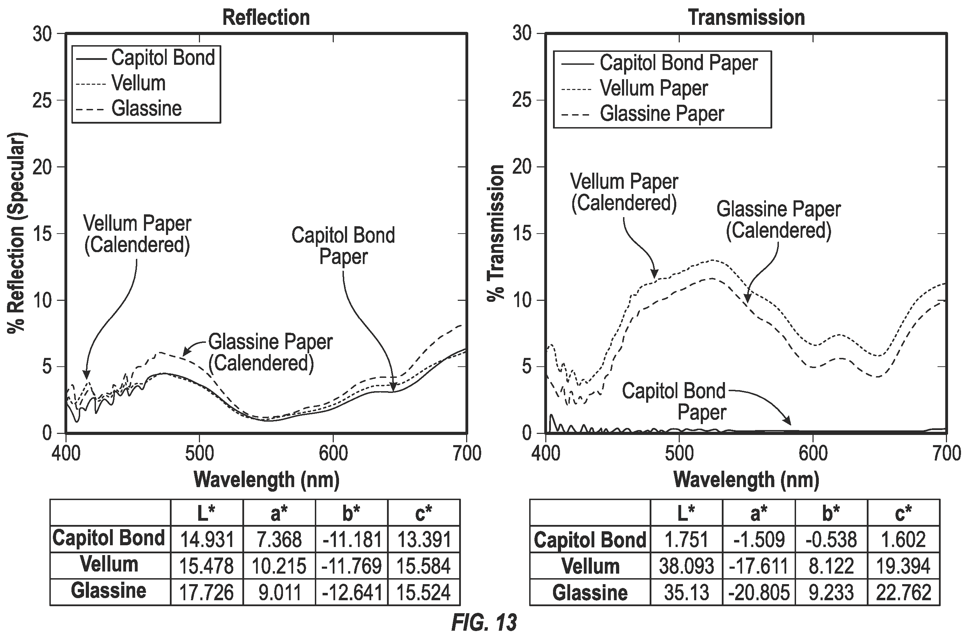

It has next been observed that calendered paper can significantly improve the light transmission through the paper, which is obtained by preferably pressing the paper between two rollers, which compresses the paper. FIG. 12 shows the percent transmission of calendered Glassine Paper and Vellum Paper versus non-calendered Capitol Bond Paper. The calendered Glassine Paper has about 24 times higher transmission than non-calendered Capitol Bond Paper, while the Vellum Paper has about 15 times higher transmission than non-calendered Capitol Bond Paper. FIG. 13 shows both the reflection and transmission spectra for a five (5) layer optical device described in U.S. Pat. No. 10,838,218 (i.e., two metal layers that sandwich at least one transparent dielectric layer further including upper and lower dielectric layers) applied to calendered and non-calendered paper, with a magenta-green pigment. The magnitude of the transmission is about 35 times higher for the calendered papers as compared to the non-calendered Capitol Bond paper. Furthermore, the chroma of the transmitted color is higher for the calendered papers and the chroma in reflection appears improved for the calendered papers. It is again contemplated that the use of calendered paper for the aforementioned improved transmission would have a similar effect with respect to the optical structures having a single metal layer as described herein.

## Claims

1. An optical structure having dichroic effects comprising:
(a) a single metal layer having a length and two dielectric layers disposed on and in contact with opposite sides of said single metal layer wherein the single metal layer indicates a refractive index to extinction coefficient of less than 0.6 and the two dielectric layers disposed on and in contact with the metal layer each having an exposed surface that runs along the length of the single metal layer;
(b) said two dielectric layers are **characterized in that**: (1) both indicate a refractive index of greater than or equal to 1.65; or (2) both indicate a refractive index of less than 1.65; and
(c) wherein the optical structure: (i) produces a first color in a reflection view and a second color different from the first color in a transmission view; and/or (ii) changes to a different color when viewing at different angles in both transmission and reflection views.

2. An optical structure having dichroic effects comprising:
(a) a single metal layer and two dielectric layers disposed on and in contact with opposite sides of said single metal layer wherein said single metal layer indicates a ratio of refractive index to extinction coefficient of less than 0.6 and the two dielectric layers disposed on and in contact with the metal layer indicate a refractive index of less than 1.65;
(b) two additional dielectric layers each separately disposed on and in contact with one of the two dielectric layers on the single metal layer, where the two additional dielectric layers indicate a refractive index of greater than or equal to 1.65; and
(c) wherein the optical structure: (i) produces a first color in a reflection view and a second color different from the first color in a transmission view; and/or (ii) changes to a different color when viewing at different angles in both transmission and reflection views.

3. An optical structure having dichroic effects comprising:
(a) a single metal layer and two dielectric layers disposed on and in contact with opposite sides of said single metal layer wherein said single metal layer indicates a ratio of refractive index to extinction coefficient of less than 0.6 and the two dielectric layers disposed on and in contact with the metal layer indicate a refractive index of greater than or equal to 1.65;
(b) two additional dielectric layers each separately disposed on and in contact with one of the two dielectric layers on the single metal layer where the two additional dielectric layers indicate a refractive index of less than 1.65; and
(c) wherein the optical structure: (i) produces a first color in a reflection view and a second color different from the first color in a transmission view; and/or (ii) changes to a different color when viewing at different angles in both transmission and reflection views.

4. An optical structure having dichroic effects comprising:
(a) a single metal layer and two dielectric layers disposed on and in contact with opposite sides of said single metal layer wherein said single metal layer indicates a ratio of refractive index to extinction coefficient of less than 0.6 and the two dielectric layers disposed on and in contact with the metal layer indicate a refractive index of greater than or equal to 1.65;
(b) two additional dielectric layers each separately disposed on and in contact with one of the two dielectric layers on the single metal layer where the two additional dielectric layers indicate a refractive index of greater than or equal to 1.65; and
(c) wherein the optical structure: (i) produces a first color in a reflection view and a second color different from the first color in a transmission view; and/or (ii) changes to a different color when viewing at different angles in both transmission and reflection views.

5. The optical structure of one of the preceding claims wherein the metal for the single metal layer comprises at least one of silver (Ag), aluminum (Al), nickel (Ni), copper (Cu), gold (Au) or an alloy of the foregoing metals.

6. The optical structure one of the preceding claims wherein the single metal layer has a thickness in the range of 5.0 nm to 50.0 nm.

7. The optical structure of claim 1, 3 or 4 wherein the two dielectric layers both indicating a refractive index of greater than or equal to 1.65 comprise at least one of titanium dioxide (TiO₂), cerium oxide (CeO₂), tantalum pentoxide (Ta₂O₅), indium tin oxide (ITO), zirconium dioxide (ZrO₂), niobium oxide (Nb₂O₅), zinc oxide (ZnO), yttrium oxide (Y₂O₃), hafnium oxide (HfO₂), zinc sulfide (ZnS), or combinations thereof.

8. The optical structure of claim 1 or 2, wherein the two dielectric layers both indicating a refractive index of less than 1.65 comprise at least one of silicon dioxide (SiO₂), aluminum oxide (Al₂O₃) magnesium fluoride (MgF₂), sodium fluoride (NaF), calcium fluoride (CaF), strontium fluoride (SrF₂), barium fluoride (BaF₂), sodium hexafluoroaluminate (Na₃AlF₆), polymeric material or combinations thereof.

9. The optical structure of claim 1, 3 or 4 wherein the two dielectric layers both indicating a refractive index of greater than or equal to 1.65 each have a thickness in the range of 5.0 nm to 1000.0 nm.

10. The optical structure of claim 1 or 2 wherein the two dielectric layers both indicating a refractive index of less than 1.65 each have a thickness in the range of 10.0 nm to 1000.0 nm.

11. The optical structure of one of claims 1 to 4 wherein the single metal layer indicates a ratio of refractive index to extinction coefficient of 0.01 to 0.6.

12. The optical device of claim 2 wherein the two additional dielectric layers comprise at least one of titanium dioxide (TiO₂), cerium oxide (CeO₂), tantalum pentoxide (Ta₂O₅), indium tin oxide (ITO), zirconium dioxide (ZrO₂), niobium oxide (Nb₂O₅), zinc oxide (ZnO), yttrium oxide (Y₂O₃), hafnium oxide (HfO₂), zinc sulfide (ZnS), or combinations thereof wherein the two additional dielectric layers are preferably present at a thickness of 5.0 nm to 1000.0 nm.

13. The optical structure of claim 3 wherein the two additional dielectric layers comprise at least one of silicon dioxide (SiO₂), aluminum oxide (Al₂O₃) magnesium fluoride (MgF₂), sodium fluoride (NaF), calcium fluoride (CaF), strontium fluoride (SrF₂), barium fluoride (BaF₂), sodium hexafluoroaluminate (Na₃AlF₆),polymeric material, or combinations thereof wherein the two additional dielectric layers preferably have a thickness of 10.0 nm to 1000.0 nm.

14. The optical structure of one of claims 1 to 4 in the form of a foil, pigment, ink or paint, wherein preferably, a transparent or translucent dye is added to said ink.

15. The optical structure of one of claims 1 to 4 positioned on a document, card, product or package, wherein said document preferably has pores and contains polymer resin in said pores.
